# EUROPÄISCHE PATENTSCHRIFT

(11) **EP 0 597 871 B1**
(45) Veröffentlichungstag und Bekanntmachung des Hinweises auf die Patenterteilung: **01.10.1997**
(21) Anmeldenummer: 92913393.2
(22) Anmeldetag: 07.07.1992
(51) Int. Cl.: B23B 51/04, B23B 27/14

(54) **SCHNEIDEINSATZ UND BOHRWERKZEUG FÜR BOHRUNGEN IN VOLLMATERIAL**
CUTTING INSERT AND DRILLING TOOL FOR DRILLING IN SOLID MATERIAL
PLAQUETTES DE COUPE ET OUTIL DE PER AGE POUR LE PER AGE DE MATERIAU PLEIN

(30) Priorität: 08.08.1991 DE 4126241
(43) Veröffentlichungstag der Anmeldung: 25.05.1994
(73) Patentinhaber: Widia GmbH, 45145 Essen (DE)
(72) Erfinder: VON HAAS, Rainer, D-2054 Geesthacht (DE); WEGENER, Manfred, D-4300 Essen 14 (DE)
(74) Vertreter: Vomberg, Friedhelm, Dipl.-Phys.
(86) Internationale Anmeldenummer: DE9200562
(87) Internationale Veröffentlichungsnummer: WO9302824

(56) Entgegenhaltungen:
- EP-A- 0 125 568
- EP-A- 0 287 904
- WO-A-91/01839
- FR-A- 1 399 654
- FR-A- 2 387 723
- FR-A- 2 475 438
- ep292455

## Beschreibung

Die Erfindung betrifft einen Schneideinsatz zum Bohren, insbesondere zum Bohren in Vollmaterial, mit mindestens drei die Spanfläche begrenzenden Schneidecken und zwischen zwei benachharten Schneidecken liegenden Schneidkanten (siehe z.B. DE-C-2730418).

Weiterhin wird offenbart ein Bohrwerkzeug für Bohrungen in Vollmaterial, mit einem Schaft und mindestens zwei an der Stirnseite des Schaftes in je einer Aussparung angeordneten, mehrere Schneidkanten aufweisenden auswechselbaren geometrisch ähnlichen Schneidplatten, die mit verschiedenem Radialabstand am Schaft angeordnet sind, deren Arbeitsbereiche aneinandergrenzen und sich teilweise überdecken, wobei jede Schneidplatte Schneidkanten mit zueinander geneigt angeordneten Schneidkantenteilbereichen aufweist, die im Bearbeitungszustand gleichzeitig in Eingriff stehen, wobei die radial innerste Schneidplatte unmittelbar an die Bohrerachse angrenzt oder dieselbe geringfügig überschreitet.

Schneideinsätze sind in vielfachen Grundformen bekannt, so z.B. als sechseckige, achteckige, fünfeckige, dreieckige, runde, rhombische und rechteckige Schneidplatten, zum Teil auch mit vergrößertem Eckenwinkel. Insbesondere zum Bohren in Vollmaterial werden sechseckige Schneidplatten verwendet, bei denen jeweils zwei Schneidkanten spanend in Eingriff stehen, die einen eingeschlossenen stumpfen Winkel von 120 bis 170° bilden. Die Verwendung solcher Schneidplatten wird beispielsweise in der DE 27 30 418 C2 vorgeschlagen, wobei die Schneidplatten an je einer Aussparung des Bohrerschaftes so angeordnet sind, daß die Winkelhalbierenden der in Eingriff stehenden Schneidplatten jeder Wendeschneidplatte zur Bohrerachse parallel oder unter einer geringfügigen Kippung von maximal 2° angeordnet sind.

Nachteilig bei diesem Bohrer ist insbesondere, daß ein Kraftausgleich des Bohrerschaftes in radialer Richtung nur dann möglich ist, wenn jeweils beide in Eingriff stehenden Schneidkanten einer Schneidplatte im wesentlichen über ihre volle Länge in Eingriff stehen bzw. die Arbeitsbereiche benachbarter Schneidplatten sich nicht überlappen. Weiterhin muß bei Änderung des Bohrungsdurchmessers ein neuer Satz von Schneideinsätzen verwendet werden.

Entsprechendes gilt auch, wenn man die in der EP 0 181 844 B1 beschriebenen Schneideinsätze verwendet, die in einer Ansicht von oben eine etwa rechtwinklige Kontur haben, wobei an gegenüberliegenden Seiten jeweils zwei Schneidkantenpaare, die unter einem stumpfen Winkel angeordnet sind, liegen.

In der EP 0 054 913 B1 wird vorgeschlagen, die Aufnahmen für die einzelnen Wendeschneidplatten derart anzubringen, daß sich die radialen Schnittkraftkomponenten der in Eingriff stehenden Schneidkanten für jede einzelne Wendeschneidplatte ausgleichen, indem die Winkelhalbierenden dieser Schneidkante gegen die parallelen zur Bohrerachse um einen Winkel geneigt werden, der von der wirksamen Länge der längs eines Teilabschnittes in Eingriff stehenden Schneidkante abhängig ist.

Zum Ausgleich der Radialkräfte ist in der DE 27 51 255 C2 auch vorgeschlagen worden, die Radialebene des inneren Schneideinsatzes zum Ausgleich der auf den Bohrerschaft einwirkenden radialen Kräfte entgegen der Drehrichtung des Bohrers um einen bestimmten Winkel gegen den am Umfang angeordneten Schneideinsatz nach rückwärts abzuwinkeln. Hierdurch werden die Kräfte jedoch lediglich parallel gerichtet, aber nicht ausgeglichen, da der Versatzwinkel keinen Einfluß auf die Größe der Radial- und der Schnittkräfte haben kann. Somit bleiben die Kräfte als Funktion der Schnittbedingungen erhalten und sind unabhängig von der Werkzeuggeometrie.

Die FR-A-2 387 723 beschreibt ein Bohrwerkzeug für Bohrungen in Vollmaterial, das einen Schaft und mindestens zwei an der Stirnseite des Schaftes in je einer Aussparung angeordneten mehrere Schneidkanten aufweisenden auswechselbaren geometrisch ähnlichen Schneideinsätzen besitzt, die mit verschiedenem Radialabstand am Schaft angeordnet sind. Die Arbeitsbereiche dieser Schneideinsätze grenzen einander an und überdecken sich teilweise. Die Schneidkanten liegen auf einer Linie, die etwa in ihrer Mitte eine Kerbe enthält, die zur Unterbrechung bzw. Limitierung der wirksamen Schneidkantenlänge dient. Je nach Lage des Schneideinsatzes in bezug auf die Bohrerachse ist auch nur eine der beiden Schneidkantenhälften im wirksamen Schneideingriff.

Schließlich ist insbesondere für Bohrungen in Plattenstapeln aber auch in einstückigem Vollmaterial in der DE 38 02 290 C1 beschrieben worden, auf einem Durchmesser jenseits der durch die Bohrerachse gekennzeichneten Hälfte eine erste Wendeschneidplatte radial außen anzuordnen und auf der gegenüberliegenden Seite zwei kleinere Wendeschneidplatten, wobei die wirksame äußere Schneidkante der radial außen angeordneten Wendeschneidplatte annähernd auf dem gleichen Arbeitskonus und auf dem gleichen Maximalradius verläuft wie die radial äußere Schneidkante der größten Wendeschneidplatte. Auch mit dieser Anordnung kann lediglich ein radialer Schnittkraftausgleich erzielt werden.

Alle vorgenannten Bohrwerkzeuge haben darüber hinaus den Nachteil, daß die bei jeder Schneidplatte erzeugten Späne relativ breit sind, was zu erhöhten Reibungen der Späne beim Abfließen entlang der Spannuten des Bohrerschaftes führt. Insbesondere lassen sich bei den nach dem Stand der Technik bekannten Bohrern Bildungen von Wirrspänen nicht vermeiden. Ein weiterer wesentlicher Nachteil der Bohrer besteht in einer unzureichenden Zentrierung, die prinzipiell nur durch die bei Tieflochbohrern bekannten Vorbohrer beseitigt werden konnte. Ein Vorbohrer erhöht jedoch den konstruktiven Aufwand und bedingt durch die von den im übrigen verwendeten Wendeschneidplatten unterschiedliche Gestaltung eine zusätzliche Verschleißmaterialvorhaltung.

Bei Vollbohrern für große Bohrtiefen über dem vierfachen Bohrerdurchmesser ist es auch bekannt, in einer Kassette auf jeder der Bohrerschafthälften angeordnete Wendeschneidplattenpaare, also insgesamt vier Wendeschneidplatten vorzusehen. Diese Konstruktion erhöht jedoch die Anzahl der jeweils auszuwechselnden Wendeschneidplatten. Im übrigen ist durch die genormte Größe der zur Verfügung stehenden Wendeschneidplatten eine solche Konstruktion auf Bohrer für größere Bohrlochdurchmesser begrenzt.

Es ist daher Aufgabe der vorliegenden Erfindung, einen Schneideinsatz und ein Bohrwerkzeug der eingangs genannten Art dahingehend weiterzuentwickeln, daß die Bildung von Wirrspänen vermieden wird, die Spanabfuhr verbessert wird und ohne zusätzlichen Aufwand eine bessere Führung, insbesondere verbesserte Zentrierung des Bohrers auf konstruktiv einfache Weise geschaffen wird.

Die auf dem Schneideinsatz bezogene Aufgabe wird durch den im Anspruch 1 beschriebenen Schneideinsatz gelöst, dessen Neuerung darin besteht, daß mindestens eine der Schneidkanten eine Einschnürung aufweist, durch die zwei Schneidkantenteilbereiche gebildet werden, die einen Winkel von weniger als 170° einschließen oder durch die eine konkave Form der Schneidkante gebildet wird.

Nach einer weiteren Ausgestaltung der Erfindung weist der Schneideinsatz an mindestens einer Schneidkante mindestens zwei vorstehende Schneidspitzen auf, zwischen denen die Einschnürung liegt oder die eine konkave Form der Schneidkante einschließen.

Vorzugsweise besitzt der Schneideinsatz zwei Schneidspitzen pro Schneidkante. Hierdurch wird erreicht, daß eine einzige Wendeschneidplatte mehr als einen Schneidbereich für den Span erhält, was mit einer verbesserten Spanabfuhr einhergeht. Auch kann mit einer entsprechenden Ausrichtung dieser Schneidplatte die Zentrierung des Bohrers erheblich verbessert werden.

Insbesondere soll nach einer weiteren Ausgestaltung der Schneidkante die Anzahl der Schneidspitzen der Anzahl der Schneidbereiche entsprechend gleich groß sein. Dies bedeutet bei einer Wendeschneidplatte mit zwei Schneidspitzen die Ausbildung von zwei Schneidbereichen, über die jeweils im Durchmesser schmalere Späne ausgebildet werden, die letztlich beim Bohren die Spanabfuhr erleichtern und auch leichter gebrochen werden können.

Nach einer weiteren Ausgestaltung der Erfindung besitzt jede der Schneidkanten eine im wesentlichen konkave Form mit einer Einschnürung, die sich vorzugsweise in der Mitte der Schneidkante befindet. In Abkehr der bisher verwendeten sechseckigen Schneidplatten mit jeweiligem stumpfen Winkel zwischen zwei aneinandergrenzender Schneidkanten in Form einer "Ausstülpung" wird erfindungsgemäß die Schneidkantenmitte gegenüber einer Verbindungslinie zweier benachbarter Schneidecken nach hinten versetzt angeordnet, wodurch zwei Schneidbereiche pro Schneidkante geschaffen werden. Vorzugsweise werden durch die Einschnürung zwei Schneidkantenteilbereiche gebildet, die einen äußeren Winkel von weniger als 176° einschließen. Insbesondere liegt dieser Winkel zwischen 145 und 170°.

Eine im Eckenbereich angeordnete Schneidspitze kann vorzugsweise dadurch geschaffen werden, daß die Ecke mit einem vergrößerten Eckenwinkel ausgeführt ist. Hierbei sollen vorzugsweise die zwei Schneidspitzen einer Schneidkante etwa in der jeweiligen eckennahen Schneidkantenbereichshälfte angeordnet sein.

Nach einer weiteren Ausgestaltung mit dem Ziel, eine weitestmögliche Glättung der mit dem Schneideinsatz bzw. dem Bohrwerkzeug geschaffenen Bohrlochwand zu erhalten, wird jede eine Hauptschneidkante begrenzende Schneidecke jenseits der Hauptschneidkante einer als Nebenschneidkante ausgebildete Verlängerung aufweisen, die im wesentlichen der Bohrlochlängsachse parallel oder hiergegen unter einem Winkel unter 10° leicht geneigt ist. Da die Schneideinsätze im wesentlichen mit ihrer Mittellängsachse, die senkrecht auf der Verbindungslinie der Schneidecken einer Hauptschneidkante steht, parallel zur Bohrlochlängsachse eingespannt werden, liefert diese Mittellängsachse eine konstruktive Orientierungslinie für die Lage der Nebenschneidkanten. Diese Nebenschneidkante bewirkt, daß die Bohrlochwand beim Schneidkantenvortrieb ein Schlichten der bereits geschaffenen Bohrlochmantelflächen herbeiführt. Da die Schneidecke beim Bohrvortrieb eine wendelförmige Kurve beschreibt, ergibt sich ohne die erfindungsgemäße Verlängerung in einer Bohrlochquerschnittsansicht jeweils zwischen zwei aufeinanderfolgenden Vorschubpositionen ein Grat, der durch die Nebenschneidkante in Form eines Schlichtens abgetragen wird. Wesentlich ist, daß die für dieses Abtragen erforderliche Nebenschneide im wesentlichen parallel der Bohrlochlängsachse oder hiergegen unter einem kleinen Winkel leicht geneigt ist. Die Neigung soll vorzugsweise 1 bis 2° gegen die Bohrlochlängsachse nicht überschreiten.

Nach einer weiteren Ausgestaltung der Erfindung die Länge der als Nebenschneide ausgebildeten Verlängerung etwa der Vorschublänge bei einer Umdrehung des Bohrers entsprechen, vorzugsweise bei kleinen Bohrern bis 20 mm Bohrlochdurchmesser bis 2/10 mm und bei großen Bohrern bis zu 60 mm Bohrlochdurchmesser bis zu 4/10 mm betragen. Der Schneideckenradius beträgt vorzugsweise 0,2 bis 1,2 mm.

Die Schneidecke kann hierbei entweder durchgehend abgerundet ausgebildet sein oder kurze gerade Schneideckenbereiche aufweisen, etwa in Form einer Anfasung.

Schneideinsätze in einer rhombenförmigen oder dreieckigen Grundform mit einem in der Schneidecke angeordneten Nasenabschnitt oder wenigstens einer mit dem Nasenabschnitt verbundenen Hauptschneidkante, bei der der Nasenabschnitt in der Breitenrichtung an einer spitzwinkligen Schneidenecke verlängert ist und aus einer Anzahl gekrümmter Segmente besteht, die im wesentlichen symmetrisch um eine Mittellinie der Schneidecke angeordnet sind, sind zwar aus der EP 0 162 029 B1 bekannt, jedoch dient dieser Schneideinsatz speziellen hier nicht angesprochenen Einsatzzwecken, wie dem Längsdrehen, Einwärts-Nachformdrehen, Schleifreliefdrehen und Auswärts-Nachformdrehen. Bei diesem Schneideinsatz dient auch nur der Nasenabschnitt als verkürzte wirksame Schneidkante, so daß dieser Schneideinsatz praktisch nur für die genannten Zwecke, nicht jedoch zum Bohren verwendbar ist.

Weiterhin bevorzugt soll der Abstand der Einschnürung zur Schneidspitze in bezug auf eine Vertikale zur Verbindungslinie der Schneidecken im Bereich zwischen 0,1 und 1,8 mm liegen. Mit diesem Abstand ist der Abstand zweier paralleler Linien gemeint, die durch den Talpunkt der Einschnürung einerseits und durch die Spitze der Schneidecken andererseits laufen und die parallel zur Verbindungslinie der Schneidecken verlaufen.

Vorzugsweise ist jede Schneidkante in bezug auf ihre Mittelsenkrechte achsensymmetrisch ausgebildet.

Der Bereich der genannten Einschnürung kann durch entsprechende Ausgestaltung der Schneidplattenseitenflächen eckig ausgeführt sein, vorzugsweise wird er jedoch abgerundet. Insbesondere soll der Schneideinsatz eine im wesentlichen dreieckige oder viereckige Form (in einer Draufsicht gesehen) haben und/oder als Wendeschneidplatte ausgebildet sein.

Die Schneidecken sowie der Bereich der Einschnürung sind vorzugsweise abgerundet.

Hinsichtlich der Ausgestaltung der Seitenflächen bzw. Freiflächen unter Bildung eines Freiwinkels sowie der Spanflächen kann auf die grundsätzlich nach dem Stand der Technik bekannten Ausführungsformen zurückgegriffen werden. Die Spanfläche kann beispielsweise im Anschluß an die Schneidkante eine Fase und/oder eine Spanbrechernut sowie Spanformelemente besitzen.

Die auf das Bohrwerkzeug bezogene Aufgabe wird durch die im Anspruch 8 beschriebene Ausführung gelöst. Die Aufnahmen für die einzelnen vorstehend beschriebenen Schneideinsätze sind entsprechend ausgestaltet. Die Senkrechte der Verbindungslinie zweier benachbarter Schneidecken des innersten Schneideinsatzes ist gegen die Schaftlängsachse um einen Winkel so geneigt, daß die innenliegende Schneidspitze eines jeden Schneideinsatzes gegenüber der nächstliegenden in Eingriff stehenden Schneidspitze in Axialrichtung des Bohrwerkzeuges um eine Strecke vorsteht, die größer als die Fertigungstoleranz der Aufnahme und des Schneideinsatzes ist, vorzugsweise um mehr als 0,05 mm. Die Vorteile dieses Bohrers bestehen darin, daß bei ein und demselben Bohrlochdurchmesser statt zweier relativ breiter Späne vier entsprechend schmalere Späne entstehen, die über die Wendelspannut des Bohrerschaftes besser abgeführt werden können sowie auch leicher brechen, so daß Wirrspanbildung vermieden wird. Durch die Ausbildung von zwei Schneidbereichen pro Wendeschneidplatte mit der Maßgabe, daß die innere Schneidspitze gleichzeitig zur Zentrierung des Bohrers dient, wird für einen Bohrlochdurchmesser von insbesondere 14 bis 18 mm eine konstruktiv einfache aber mit besserer anderer Führung versehene Lösung geschaffen.

Weiterbildungen des Bohrerwerkzeuges sind in den Ansprüchen 9 bis 13 beschrieben.

So kann der dem jeweils inneren Schneideinsatz benachbarte Schneideinsatz in Axialrichtung des Bohrwerkzeuges um eine Strecke nach hinten versetzt angeordnet sein, vorzugsweise um ein Maß, das die zulässige Fertigungstoleranz übersteigt, insbesondere 0,1 mm. Diese Maßnahme dient insbesondere zur weiteren Bohrerzentrierung.

Um einen möglichst gleichmäßigen Lauf des Bohrers im Bohrloch zu gewährleisten, ist weiterhin der dem jeweils innere Schneideinsatz benachbarte Schneideinsatz mit seiner in Axialrichtung des Bohrwerkzeuges vorstehenden Schneidspitze in einer Schneidebene angeordnet, die zwischen der Schneidebene der vorstehenden Schneidspitze und der dem nach hinten versetzt angeordneten Schneidspitze des inneren Schneideinsatzes liegt, vorzugsweise in der Mitte der genannten Schneidebenen des inneren Schneideinsatzes. Nach einer weiteren Ausgestaltung dieses Gedankens ist der Schneidebenenabstand zwischen der durch die vordere Schneidspitze gebildeten Ebene und der durch die nach hinten versetzt angeordneten Schneidspitze eines Schneideinsatzes größer als 0,02 mm, vorzugsweise größer als 0,04 mm.

Prinzipiell können die Schneideinsätze beliebig ausgerichtet, d.h. zur Bohrerlängsachse parallel oder auch gekippt angeordnet sein. Vorzugsweise wird jedoch eine Kippung aller Schneideinsätze um denselben Winkel vorgeschlagen. Dieser Winkel, den eine Senkrechte zur Verbindungslinie zweier benachbarter Schneidecken der in Angriff stehenden Schneidkante aller Schneideinsätze mit der Schaftlängsachse bildet, liegt vorzugsweise zwischen 1 und 10°.

Um alle über die radialen Kraftkomponenten hinausgehenden Einflüsse beim Bohren zu berücksichtigen und um einen möglichst großen Bereich an abgestuften Bohrdurchmessern mit wenigen Schneideinsätzen abzudecken, wird weiterhin vorgeschlagen, daß mindestens eine der Senkrechten zur Verbindungslinie zweier benachbarter Schneidecken einer in Eingriff stehenden Schneidkante eines Schneideinsatzes gegen die Schaftlängsachse um einen Winkel bis zu 25° geneigt ist, wobei mindestens eine der Senkrechten in einem von 0 verschiedenen Winkel zu einer anderen Senkrechten verläuft, so daß die von 0 verschiedene Summe der aus allen in Eingriff stehenden wirksamen Schneidkanten resultierenden Radialkraftkomponente und die entsprechende Summe der Horizontalkraftkomponenten, die vorzugsweise 0 ist, eine auf die Schneidkanten wirkende Gesamtresultierende ergibt, die in Richtung des radial äußersten Schneideinsatzes oder einem hiervon um maximal 45° verschiedenen Winkel gerichtet ist. Durch diese Maßnahme können auch Bohrlöcher geschnitten werden, deren Durchmesser geringfügig größer als der Bohrerdurchmesser ist. Hierdurch entsteht der Vorteil, daß die Bohrwerkzeuge nicht in den Bohrungen klemmen können und beim Herausziehen des Bohrerschaftes keine Rückzugsriefen entstehen. Der Neigungswinkel mindestens der Senkrechten des äußeren Schneideinsatzes gegenüber der Schaftlängsachse hängt zum einen von dem Winkel ab, den die in Eingriff stehenden Schneidbereiche der wirksamen Schneidkante eines jeden Schneideinsatzes bilden, ferner vom Überlappungsgrad der Arbeitsbereiche der eingesetzten Schneideinsätze sowie dem Bohrerdurchmesser als auch schließlich von der Relation der Neigungswinkel der Senkrechten der eingesetzten Schneideinsätze zueinander. Erfahrungen haben gezeigt, daß bei gleichem Neigungswinkel der Schneidbereiche der eingesetzten Schneideinsätze und fest vorgegebenem Neigungswinkel des inneren Schneideinsatzes, der auch 0 sein kann, der Neigungswinkel des radial äußeren Schneideinsatzes mit geringer werdendem Bohrdurchmesser größer gewählt werden muß. Entsprechendes gilt auch, wenn Schneideinsätze mit größerem Neigungswinkel der Schneidbereiche zueinander eingesetzt werden. Vorzugsweise ist die Senkrechte einer Verbindungslinie zweier Schneidecken einer wirksamen Schneidkante des inneren Schneideinsatzes um einen kleineren Winkel gegenüber der Schaftlängsachse geneigt als der Winkel der betreffenden Senkrechten der äußeren Wendeschneidplatte.

Die Schneidbereiche der Schneideinsätze können gleich groß gewählt werden, bis zu einer Abweichung mit dem Überlappungsgrad von 1 zu 3.

Diese Ausgestaltung der Erfindung ermöglicht die Aufnahme für den radial außenliegenden Schneideinsatz so ausgestaltet, daß der Schneideinsatz in unterschiedlichen Radialabständen angeordnet werden kann. Dies macht die Verwendung ein und desselben Satzes von Schneideinsätzen für verschiedene Bohrdurchmesser möglich.

Vorzugsweise wird die Aufnahme bzw. werden die Aufnahmen des Bohrwerkzeuges für die Schneideinsätze so ausgebildet, daß die betreffenden Anlageflächen mit entsprechenden Flächen des Schneideinsatzes nur in den Bereichen stattfindet, in denen der Schneideinsatz keine Zerspanung leistet. Dadurch ist gewährleistet, daß ein als Wendeschneidplatte ausgebildeter Schneideinsatz auch dann optimal im Plattensitz anliegt, wenn die betreffende Schneide im wirksamen Schneidbereich bereits verschlissen ist, da die Wendeschneidplatte nur außerhalb dieser Bereiche zur Anlage kommt.

Bevorzugt werden die Bohreraufnahmen solchen Schneideinsätzen angepaßt, die jenseits der Schneidecke eine als Nebenschneidkante ausgebildete Verlängerung besitzen, die im wesentlichen der Bohrerlängsachse parallel oder hiergegen unter einen Winkel unter 10°, vorzugsweise 1° bis 2°, geneigt ist. Diese Nebenschneidkante dient zum Schlichten der bereits geschaffenen Bohrlochmantelflächen. Diese Ausführungsform ist zwar vornehmlich für Wendeschneidplatten mit rechteckigem Querschnitt bevorzugt, die zwei gegenüberliegende zueinander parallele Schneidkanten haben, jedoch können prinzipiell auch dreieckförmige Schneidplatten gleichermaßen konstruktiv verändert sein, daß sie eine Verlängerung in Form einer Nebenschneide aufweisen.

Ausführungsbeispiele der Erfindung sind in den Zeichnungen dargestellt. Es zeigen
- Fig. 1 und 2: jeweils Draufsichten auf erfindungsgemäße Schneideinsätze mit im wesentlichen dreieckiger Grundform,
- Fig. 3 und 4: entsprechende Draufsichten von alternativen Schneideinsätzen mit im wesentlichen viereckiger Grundform,
- Fig. 5, 6: Schnittansichten des erfindungsgemäßen Bohrwerkzeuges mit verschiedenen Schneideinsätzen, jeweils im Arbeitseinsatz,
- Fig. 7a: eine Schnittansicht eines weiteren erfindungsgemäßen Bohrwerkzeuges,
- Fig. 7b: eine Stirnansicht des Bohrwerkzeuges nach Fig. 7a,
- Fig. 8: eine Draufsicht eines in Fig. 7a, b eingesetzten Schneideinsatzes und
- Fig. 9a, b: Teilquerschnittsansichten eines Schneideinsatzes beim Bohrvortrieb.

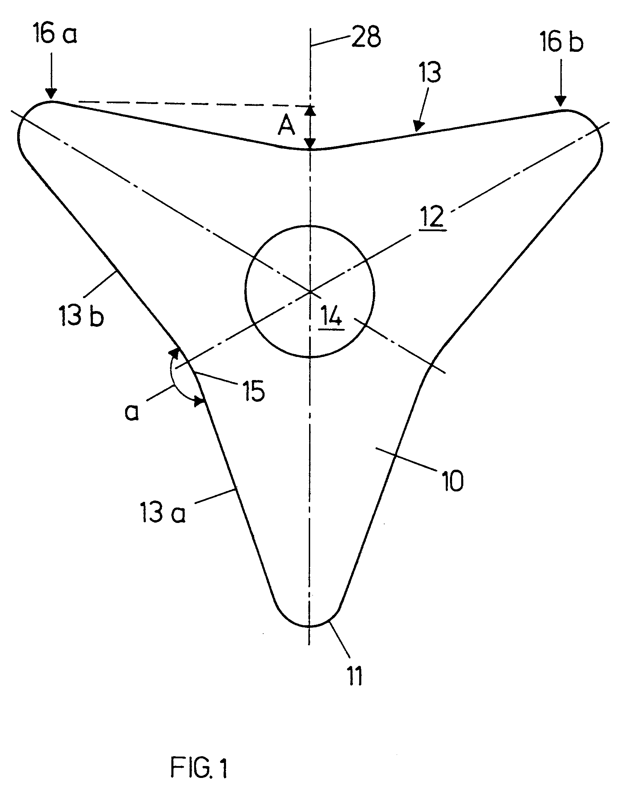

Der in Fig. 1 dargestellte Schneideinsatz 10 besitzt eine im wesentlichen dreieckige Grundform mit drei Schneidecken 11, welche die Spanfläche 12 zusammen mit den Schneidkanten 13 begrenzen. In nach dem Stand der Technik bekannter Weise besitzt der Schneideinsatz ein Befestigungsloch 14.

Jede der drei Schneidkanten 13 ist in zwei Schneidkantenteilbereiche 13a und 13b unterteilt, die jeweils geradlinig ausgebildet sind und sich von der Schneidkantenecke bis etwa zur Mitte der Schneidkante 13 erstrecken. Die Schneidkantenteilbereiche bilden einen Winkel a von 162°, so daß eine im wesentlichen konkave Form mit einer Einschnürung 15 entsteht. Entgegen den bisher nach dem Stand der Technik bekannten Ausführungsformen mit sogenannten dachförmig angeordneten Schneidkantenteilbereichen, die zwischen zwei Schneidecken nur eine Schneidspitze schaffen, bilden bei der gewählten Einschnürung der Schneidkante 13 die Schneidecken vorstehende Teile, im vorliegenden Fall die Spitzen 16a und 16b im eckennahen Bereich. Die sich hieran zur Schneidkantenmitte hin erstreckenden Schneidkantenabschnitte dienen beim Bohren als Schneidbereich, so daß durch die beiden Schneidspitzen 16a und 16b pro Schneidkante zwei Schneidbereiche geschaffen sind.

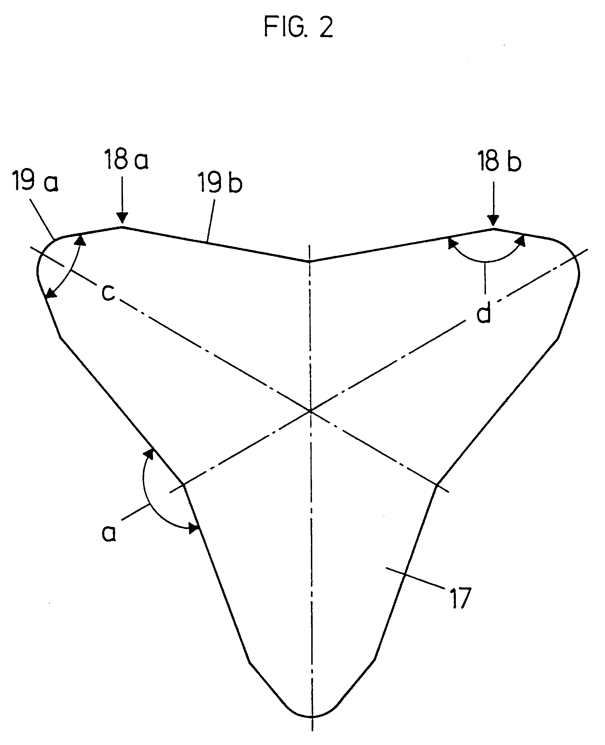

Fig. 2 stellt eine Abwandlung des Schneideinsatzes 10 nach Fig. 1 dar, und zwar derart, daß die Eckenwinkel c vergrößert sind. Die Wendeschneidplatte 17 besitzt durch den auf 82° vergrößerten Eckenwinkel ausgeprägtere Schneidspitzen 18a und 18b, die jeweils dachförmig ausgebildet sind und eine Grenzliene zwischen den eckennahen Bereichen 19a und den als Schneidbereiche dienende Schneidkantenteilbereichen 19b dienen. Der Dachwinkel d der Schneidspitzen 18a und 18b sowie der von den geneigt zueinander stehenden Schneidkantenteilbereichen 19b gebildete Winkel a betragen jeweils 160°. Im übrigen gelten für die in Fig. 2 dargestellte Schneidplatte, die ebenso auch als Wendeschneidplatte ausgeführt sein kann, entsprechende Ausführungen, wie zu dem Schneideinsatz nach Fig. 1.

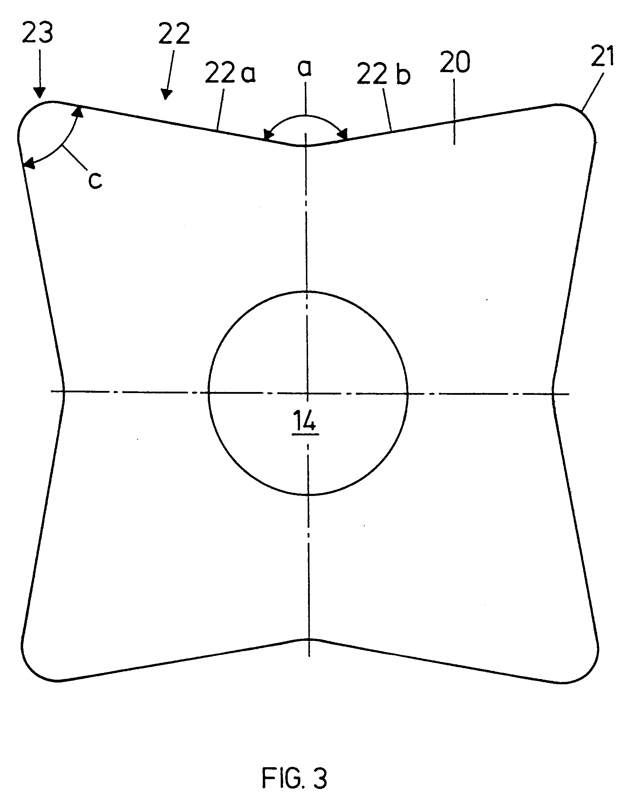

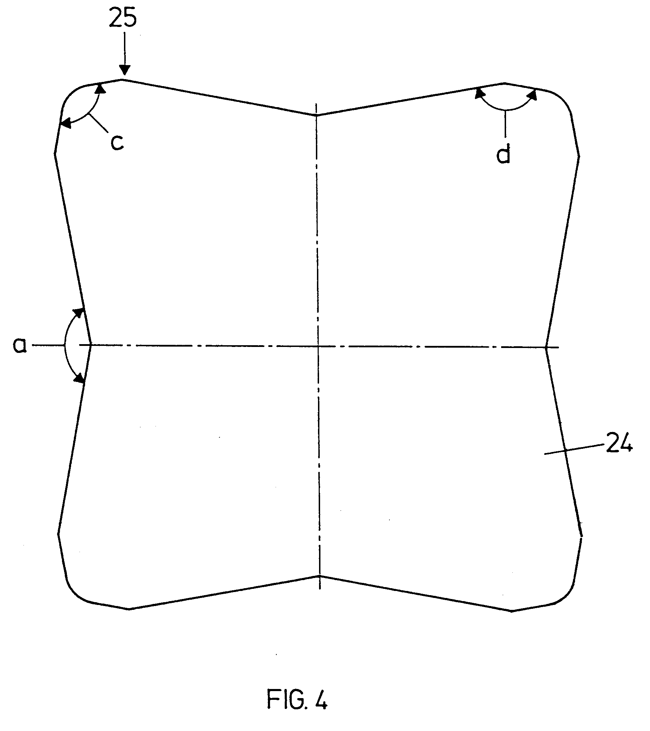

Schneideinsätze mit viereckiger Grundform sind in Fig. 3 und 4 dargestellt. Der Schneideinsatz 20 entspricht im wesentlichen dem Schneideinsatz 10 nach Fig. 1 mit der Maßgabe, daß jeweils vier Schneidecken 21 mit dazwischenliegenden Schneidkanten 22 vorgesehen sind, deren Schneidkantenteilbereiche 22a und 22b unter Bildung eines Winkels a von etwa 160° zueinander geneigt sind. Hierdurch werden, wie zu dem Schneideinsatz nach Fig. 1 beschrieben, pro Schneidkante 22 im Eckenbereich jeweils zwei Spitzen 23 gebildet. Der Schneideckenwinkel c beträgt hierdurch 70°. Auch diese Schneidplatte ist mit einem Befestigungsloch 14 ausgestattet.

In Abwandlung des vorbeschriebenen Scneideinsatzes 20 besitzt der in Fig. 4 dargestellte, auf einer viereckigen Grundform beruhende Schneideinsatz 24 auf ca. 110° vergrößerte Eckenwinkel c. Hierdurch kommt es zu einer Ausbildung von ausgeprägten Schneidspitzen 25, die sich etwa im äußeren Viertel der Schneidkante und dort mittig angeordnet befinden. Der Dachwinkel d beträgt ebenso 160° wie der Winkel a zwischen zwei aneinandergrenzenden Schneidkantenteilbereichen.

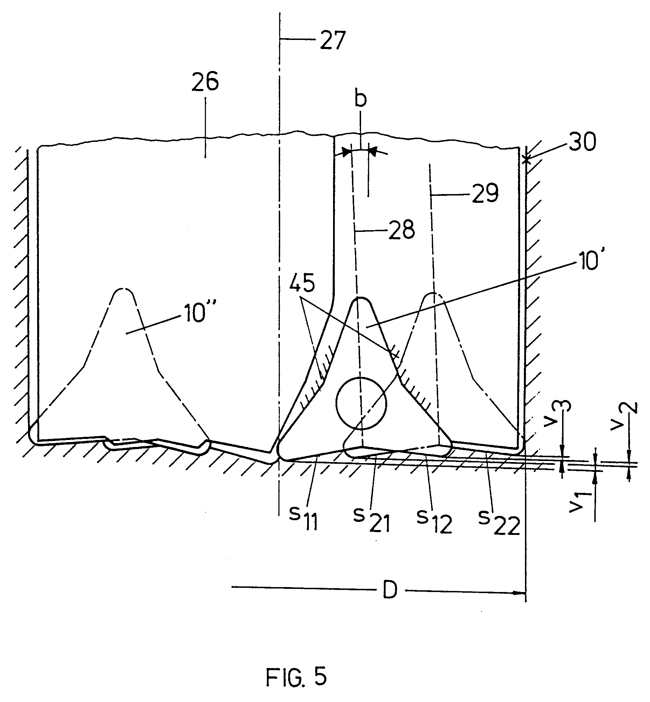

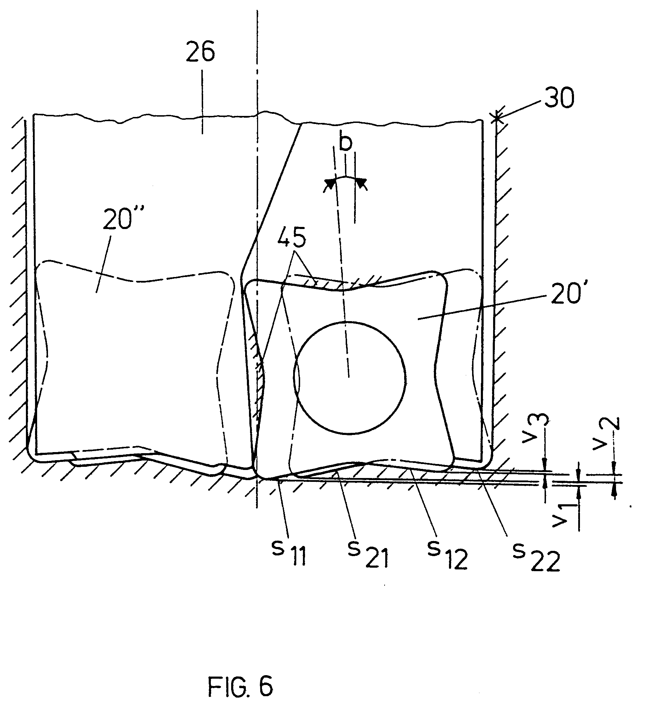

Ein erfindungsgemäßes Bohrwerkzeug, daß mit zwei Schneideinsätzen 10 entsprechend Fig. 1 bestückt ist, ist in Fig. 5 dargestellt. An einem Schaft 26 ist stirnseitig auf gegenüberliegenden Bohrerhälften jeweils ein Schneideinsatz 10' bzw. 10'' angeordnet, wobei sich die Arbeitsbereiche dieser Schneideinsätze überlappen, wie es aus der rechten Bohrerhälfte durch die strichpunktierte Darstellung des Schneideinsatzes 10'' erkennbar ist. Die Bohreraufnahmen sind um 180° gegeneinander versetzt. Der innere Schneideinsatz 10' überschreitet geringfügig die Bohrerlängsachse 27 und ist hinsichtlich seiner Senkrechten auf einer Verbindungslinie der die wirksame Schneidkante begrenzenden Schneidecken gegenüber der Schaftlängsachse um einen Winkel b von etwa 5° ebenso geneigt wie die betreffende Senkrechte 29 des Schneideinsatzes 10''. Der Schneideinsatz 10'' ist zusätzlich gegenüber dem Schneideinsatz 10' geringfügig um das Maß v₁ nach hinten versetzt, das bei etwa 0,1 mm liegt. Beim Bohren in Vollmaterial 30 kommt beim Ansetzen des Bohrers zunächst die Schneide s₁₁ bzw. die innenliegende Schneidspitze mit dem Werkstück 30 in Eingriff. Durch den gewählten Neigungswinkel b der beiden Schneideinsätze und das Maß der Zurückversetzung v₁ des äußeren Schneideinsatzes 10'' gegenüber dem inneren Schneideinsatz 10' eilt wiederum die erste Schneide s₂₁ des äußeren Schneideinsatzes 10'' mit ihrer Spitze der Spitze des Schneidenteilbereiches s₁₂ um das Maß v₂ voraus, das ebenfalls 0,1 mm beträgt. Entsprechendes gilt für die Voreilung der Spitze der Schneide s₁₂ und der Schneide s₂₂, die um daß Maß v₃ von 0,1 mm versetzt sind. Bei jedem Schneideinsatz 10' und 10'' bilden die zugehörigen Schneidebereiche s₁₁ und s₁₂ bzw. s₂₁ und s₂₂ jeweils Führungsflächen, so daß beim Bohren insgesamt pro Wendeschneidplatte zwei Späne entstehen. Entsprechendes gilt auch für das Bohrwerkzeug nach Fig. 6 mit der Maßgabe, daß dort anstelle der im wesentlichen dreieckigen Schneideinsätze (siehe Fig. 3) zum Einsatz kommen. Die Flächenbereiche der Schneidplattenaufnahmen, in denen die Wendeschneidplatte anliegt, sind schraffiert gezeichnet und mit Bezugszeichen 45 versehen. Hingegen liegt die Wendeschneidplatte im Bereich der Schneidbereiche, insbesondere der Schneidspitzen, nicht in der Anlage an, was durch eine entsprechende Ausnehmung 37 realisiert ist. Diese Form der Anlage gilt in entsprechender Weise für die Fig. 5 bis 7.

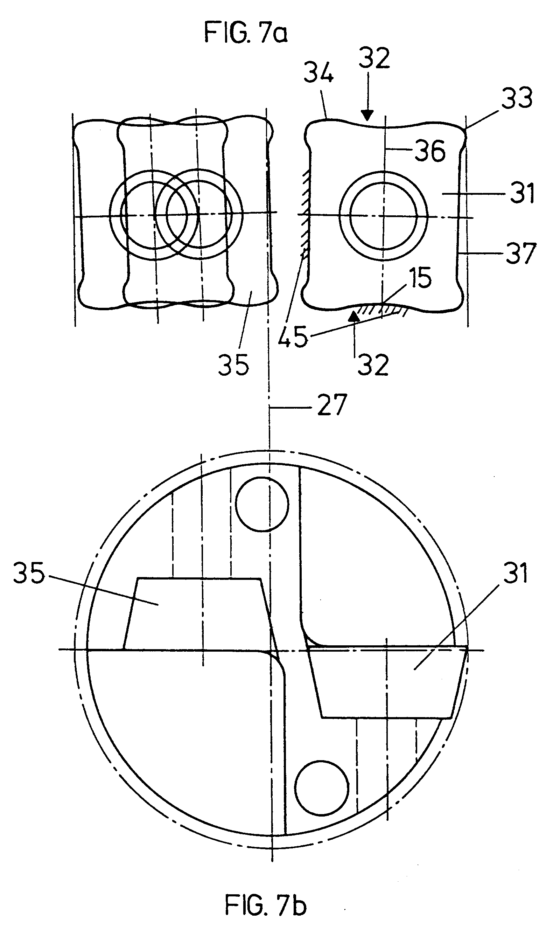

Eine Alternative der Schneideinsatzausbildung gemäß Fig. 3 ist aus Fig. 7a, rechte Bildhälfte, erkennbar. Dieser Schneideinsatz 31 besitzt ebenfalls eine im wesentlichen rechteckige Grundform, jedoch nur zwei Schneidkanten 32 auf gegenüberliegenden Seiten. Jede dieser Schneidkanten hat eine in der Schneidkantenmitte ausgeprägte konkave Form mit der bereits zu Fig. 1 beschriebenen Einschnürung 15, die im vorliegenden Fall jedoch abgerundet ausgeführt ist. Durch die Verbreiterung der Schneidecken 33 werden pro Schneidkante 32 in der bereits beschriebenen Weise (siehe Fig. 4) pro Schneidkante 32 zwei Schneidspitzen 34 gebildet, die hier ebenfalls abgerundet ausgeführt sind. Die um 180° versetzte Einbaulage der Schneideinsätze 31 und 35 ist aus Fig. 7b erkennbar. Beide Schneideinsätze 31 und 35 sind hinsichtlich ihrer Mittellängsachse 36 gegenüber der Bohrerlängsachse 27 um einen Winkel von 5° geneigt. Die langen Seitenflächen 37 der Schneideinsätze 31 und 35, die nicht als Schneidkante ausgebildet sind, können gleich groß oder länger als die Schneidkante 32 ausgestaltet sein.

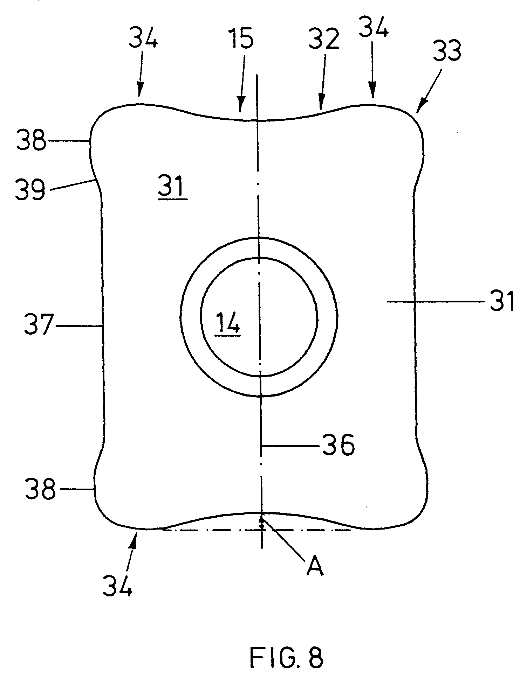

Einen Schneideinsatz 31 gemäß Fig. 7a ist in Fig. 8 vergrößert dargestellt. Aus dieser Darstellung ist ersichtlich, daß die Hauptschneidkante mit der Einschnürung 15 sowie den beiden Schneidspitzen 34, die abgerundet ausgeführt sind, durch die Schneidecken 33 beidseitig begrenzt wird. Im Anschluß an die Schneidecken 33 ist jedoch eine Verlängerung 38 ausgebildet, die im wesentlichen parallel zu der Längsachse 36 bzw. parallel zu der Achse 27 (siehe Fig. 7a) verläuft. Hieran schließt sich eine geneigte Fläche 39 an, die in die lange Seitenfläche 37 jeweils beidseitig übergeht. Abwandlungen dieses Schneideinsatzes sind sowohl dergestalt möglich, daß die Schneidspitzen 34 kantenförmig, wie in Fig. 4 (dort Schneidspitze 25), ausgebildet sind, als auch das die Schneidecken 33 eine Fase in Form eines geradlinigen Kantenbereiches aufweisen können.

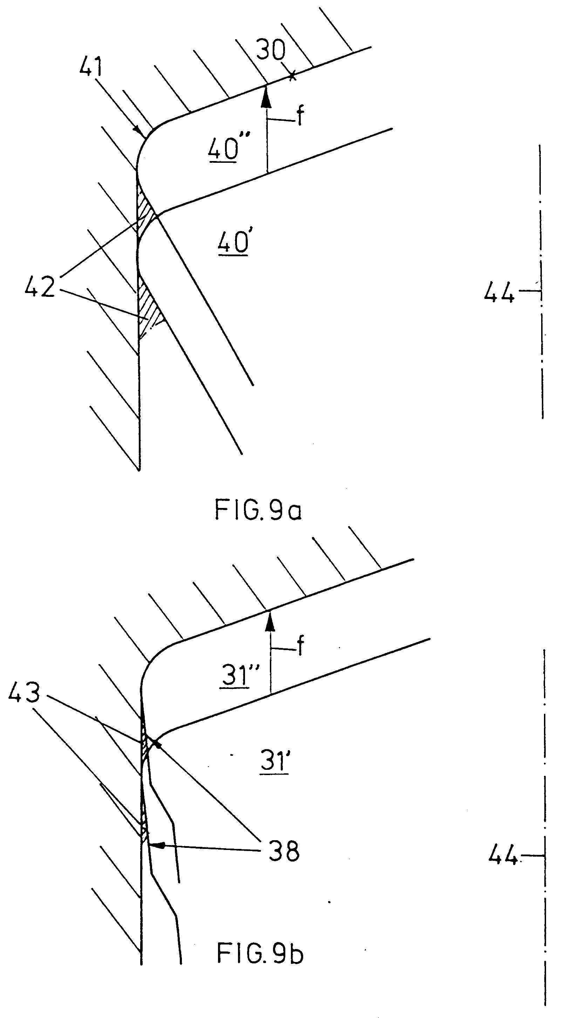

Die unterschiedliche Wirkung der Bohrer mit Schneideinsätzen, beispielsweise entsprechend der EP 0 054 913 A2, und den Schneideinsätzen gemäß Fig. 8 ist den Fig. 9a und 9b zu entnehmen. Hierin bezeichnen 30 die Bohrlochwand, die durch einen Schneideinsatz 40' bzw. 40'' gebildet wird, dermit einem Bohrfortschritt f vorgetrieben wird. Die Schneidecke 41 beschreibt jedoch beim Bohrervortrieb eine Wendel, wodurch gratförmige Wendelstücke 42 stehenbleiben, die bei konventionell ausgebildeten Schneidecken einen nicht unerheblichen Formfehler darstellen. Verwendet man eine Wendeschneidplatte gemäß Fig. 8, die mit einer Nebenschneide 38 ausgebildet ist, so wird der betreffende Wendelgrad 43 erheblich minimiert. Mit 44 ist die jeweilige Bohrlochlängsachse angedeutet.

## Patentansprüche

1. Schneideinsatz zum Bohren, insbesondere zum Bohren in Vollmaterial, mit mindestens drei die Spanfläche (12) begrenzenden Schneidecken (11, 21) und zwischen zwei benachbarten Schneidecken liegenden Schneidkanten (13, 22),
**dadurch gekennzeichnet**,
daß mindestens eine der Schneidkanten (13, 22) eine Einschnürung (15) aufweist, durch die zwei Schneidkantenteilbereiche (13a, 13b; 22a, 22b, s₁₁, s₁₂; s₂₁, s₂₂) gebildet werden, die einen Winkel (a) von weniger als 170°, vorzugsweise zwischen 150° und 170°, insbesondere 160° und 170°, einschließen oder durch die eine konkave Form der Schneidkante gebildet wird.

2. Schneideinsatz nach Anspruch 1, dadurch gekennzeichnet, daß mindestens eine der Schneidkanten mindestens zwei vorstehende Schneidspitzen (18a, 18b; 25, 34) aufweist, zwischen denen die Einschnürung (15) liegt oder die eine konkave Form der Schneidkante einschließen.

3. Schneideinsatz nach Anspruch 2, dadurch gekennzeichnet, daß pro Schneidkante entsprechend der Anzahl der Schneidspitzen gleich viele Schneidbereiche (19a, 19b) ausgebildet sind.

4. Schneideinsatz nach Anspruch 1 bis 3, dadurch gekennzeichnet, daß jede eine Hauptschneidkante (32) begrenzende Schneidecke (33) jenseits der Hauptschneidkante (32) eine als Nebenschneidkante (38) ausgebildete Verlängerung aufweist, die im wesentlichen der Bohrlochlängsachse (44) parallel oder hiergegen unter einem Winkel unter 10° leicht geneigt ist.

5. Schneideinsatz nach einem der Ansprüche 2 bis 4, dadurch gekennzeichnet, daß der Abstand (A) der Einschnürung (15) zur Schneidspitze (16a, 16b) in bezug auf eine Vertikale (28) zur Verbindungslinie der Schneidecken (11) im Bereich zwischen 0,1 mm und 1,8 mm liegt.

6. Schneideinsatz nach einem der Ansprüche 1 bis 5, dadurch gekennzeichnet, daß der Bereich der Einschnürung (15) abgerundet ist.

7. Schneideinsatz nach einem der Ansprüche 1 bis 6, dadurch gekennzeichnet, daß die Schneidecken (11, 21) abgerundet und/oder mit vergrößertem Eckenwinkel (c) ausgeführt sind.

8. Bohrwerkzeug für Bohrungen in Vollmaterial (30) mit einem Schaft (26) und mindestens zwei an der Stirnseite des Schaftes (26) in je einer Aussparung angeordneten mehrere Schneidkanten aufweisenden auswechselbaren geometrisch ähnlichen Schneideinsätzen (35, 31) nach einem der Ansprüche 1 bis 7, die mit verschiedenem Radialabstand am Schaft angeordnet sind, deren Arbeitsbereiche aneinandergrenzen und sich teilweise überdecken, wobei jeder Schneideinsatz Schneidkanten mit zueinander geneigt angeordneten Schneidkantenteilbereichen aufweist, die im Bearbeitungszustand gleichzeitig in Eingriff stehen, wobei der radial innerste Schneideinsatz (35) unmittelbar an die Bohrerachse (27) angrenzt oder dieselbe geringfügig überschreitet, wobei die Senkrechte (36) der Verbindungslinie zweier benachbarter Schneidecken des innersten Schneideinsatzes gegen die Schaftlängsachse (27) um einen Winkel (b) so geneigt ist, daß die innenliegende Schneidspitze eines jeden Schneideinsatzes (35) gegenüber der nächstliegenden in Eingriff stehenden Schneidspitze in Axialrichtung des Bohrwerkzeuges um eine Strecke vorsteht, die größer als die Fertigungstoleranz der Aufnahme und des Schneideinsatzes ist, vorzugsweise um mehr als 0,1 mm.

9. Bohrwerkzeug nach Anspruch 8, dadurch gekennzeichnet, daß der dem jeweils inneren Schneideinsatz (10', 20', 35) benachbarte Schneideinsatz (10'', 20'', 31) in Axialrichtung des Bohrwerkzeuges um eine Strecke (v₁, v₂, v₃) nach hinten versetzt angeordnet ist, die größer als die Fertigungstoleranz der Aufnahme und des Schneideinsatzes ist, vorzugsweise um mehr als 0,1 mm.

10. Bohrwerkzeug nach einem der Ansprüche 8 oder 9, dadurch gekennzeichnet, daß der dem jeweils inneren Schneideinsatz (10', 20', 35) benachbarte Schneideinsatz (10'', 20'', 31) mit seiner in Axialrichtung des Bohrwerkzeuges vorstehenden Schneidspitze (s₂₁) oder Schneidecke in einer Schneidebene liegt, die zwischen der Schneidebene der vorstehenden Schneidspitzen (s₁₁) oder Schneidecken und der der nach hinten versetzt angeordneten Schneidspitze (s₁₂) oder Schneidecke des inneren Schneideinsatzes liegt, vorzugsweise in der Mitte der genannten Schneidebenen des inneren Schneideinsatzes.

11. Bohrwerkzeug nach einem der Ansprüche 8 bis 10, dadurch gekennzeichnet, daß eine Senkrechte (28, 29, 36) zur Verbindungslinie zweier benachbarter Schneidecken der in Eingriff stehenden Schneidkante aller Schneideinsätze um denselben Winkel (b), vorzugsweise zwischen 1 und 10° gegenüber der Schaftlängsachse geneigt ist.

12. Bohrwerkzeug nach einem der Ansprüche 8 bis 10, dadurch gekennzeichnet, daß die Schneidbereiche der Schneideinsätze gleich groß gewählt werden, bis zu einer Abweichung mit dem Überlappungsgrad von 1 zu 3, vorzugsweise die Aufnahme für den radial außenliegenden Schneideinsatz (10'', 20'', 33) so ausgestaltet ist, daß der Schneideinsatz in unterschiedlichen Radialabständen angeordnet werden kann.

13. Bohrwerkzeug nach einem der Ansprüche 8 bis 12, dadurch gekennzeichnet, daß der Schneideckenradius 0,2 bis 1,2 mm beträgt und/oder daß die Schneidecke (33) zwischen der Verlängerung (38) und der Schneidspitze (34) gerade Schneideckenbereiche aufweist.

## Claims

1. Cutting insert for drilling, particularly for drilling in solid material, with at least three cutting angles (11, 21) delimiting the rake face (12) and with cutting edges (13, 22) lying between two adjacent cutting angles characterized in that at least one of the cutting edges (13, 22) has a constriction (15), by which two partial cutting edge segments (13a, 13b; 22a, 22b, s₁₁, s₁₂, s₂₁, s₂₂) are formed, which enclose an angle (a) of less than 170°, preferably between 150° and 170°, in particular 160° and 170°, or by which a concave shape of the cutting edge is formed.

2. Cutting insert according to claim 1, characterized in that at least one of the cutting edges has at least two protruding cutting points (18a, 18b; 25, 34) with the constriction (15) lying in between or enclosing a concave shape of the cutting edge.

3. Cutting insert according to claim 2, characterized in that for each cutting edge a number of cutting areas (19a, 19b) corresponding to the number of cutting points are formed.

4. Cutting insert according to one of claim 1 to 3, characterized in that each cutting angle (33) delimiting a main cutting edge (32) has an extension meant to be a secondary cutting edge (38) protruding beyond the main cutting edge (32), which is basically parallel to the longitudinal axis (44) of the drill hole or slightly inclined thereto at an angle of less than 10°.

5. Cutting insert according to one of claim 2 to 4, characterized in that the distance (A) of the constriction (15) to the cutting point (16a, 16b) with reference to a perpendicular (28) to the connection line of cutting angles (11) ranges between 0,1 mm and 1,8 mm.

6. Cutting insert according to one of claim 1 to 5, characterized in that the area of the constriction (15) is rounded.

7. Cutting insert according to one of claims 1 to 6, characterized in that the cutting angles (11, 21) are rounded and/or formed with a widened corner angle (c).

8. Drilling tool for drilling in solid materials (30) with a shaft (26) and at least two exchangeable and geometrically similar cutting inserts (35, 31) according to one of the claims 1 to 7, arranged each in a recess on the frontal side of the shaft (26) having several cutting edges and which are arranged at various radial distances on the shaft, whose work ranges are adjacent to each other and overlap partially, whereby each cutting insert has cutting edges with partial cutting edge segments inclined towards each other, which are simultaneously engaged when the tool operates, whereby the radially innermost cutting insert (35) borders directly on the drill axis (27) or slightly surpasses the same, whereby the perpendicular (28, 36) of the connection line of two adjacent cutting angles of the innermost cutting insert is inclined by an angle (b) against the longitudinal shaft axis (27) so that inner cutting point of each of the cutting insert (35) protrudes by a length over the closest engaged cutting point in the axial direction of the drilling tool, this length being bigger than the manufacturing tolerance of the seat and the cutting insert, preferably by more than 0,1 mm.

9. Drilling tool according to claim 8, characterized in that the cutting insert (10'', 20'', 33) adjacent to the inner cutting insert (10', 20', 35) is rearwardly offset in the axial direction of the drilling tool by a length (v₁, v₂, v₃) which is bigger than the manufacturing tolerance of the seat and the cutting insert, preferably by more than 0,1 mm.

10. Drilling tool according to claim 8 or 9, characterized in that the cutting insert (10'', 20'', 31) adjacent to the inner cutting insert (10', 20', 35) lies, with its cutting point (s₂₁) protruding in the axial direction of the drilling tool or cutting angle, in a cutting plane located between the cutting plane of the protruding cutting points (s₁₁) or cutting angles and the rearwardly offset cutting point (s₁₂) or cutting angle of the inner cutting insert, preferably in the middle of said cutting planes of the inner cutting insert.

11. Drilling tool according to one of claim 8 to 10, characterized in that a perpendicular (28, 29, 36) to the connection line between two adjacent cutting angles of the engaged cutting edges of all cutting inserts is inclined with respect to the longitudinal shaft axis by the same angle (b), preferably between 1 and 10°.

12. Drilling tool according to one of claims 8 to 10, characterized in that the cutting ranges of the cutting inserts are selected equally large, up to a variation with the overlapping degree of 1 to 3, preferably the seat for the radially outer cutting insert (10'', 20'', 33) is designed so that the cutting insert can be arranged at various radial distance.

13. Drilling tool according to one of claims 8 to 12, characterized in that the radius of the cutting angles equals 0,2 to 1,2 mm and/or that the cutting angle (33) between the extension (38) and the cutting point (34) has straight cutting edge areas.

## Revendications

1. Insert de coupe pour le perçage, en particulier pour le perçage de matérieau plein, comprenant du moins trois coins de coupe (11, 21) limitant la face de coupe (12) et des tranchants (13, 22) situés entre deux coins de coupe adjacents,
**caractérisé par le fait**
que l'un du moins des tranchants (13, 22) présente un étranglement (15) par lequel deux segments partiels de tranchant (13a, 13b; 22a, 22b, s₁₁, s₁₂; s₂₁, s₂₂) sont formés, qui incluent un angle (a) de moins de 170°, de préférence compris entre 150° et 170°, en particulier entre 160° et 170°, ou par lesquels une forme concave du tranchant est formée.

2. Insert de coupe selon la revendication 1, caractérisé par le fait que l'un du moins des tranchants présente du moins deux pointes de coupe (18a, 18b; 25, 34) en saillie entre lesquelles est situé l'étranglement (15) ou qui incluent une forme concave du tranchant.

3. Insert de coupe selon la revendication 2, caractérisé par le fait que l'on réalise, par tranchant, un nombre de zones de coupe (19a, 19b) qui correspond au nombre de pointes de coupe.

4. Insert de coupe selon la revendication 1 à 3, caractérisé par le fait que chaque coin de coupe (33) limitant un tranchant principal (32) présente, au-delà du tranchant principal (32), un prolongement réalisé en tant que tranchant secondaire (38), qui est pour l'essentiel paralléle à l'axe longitudinal (44) du trou de perçage ou incliné légèrement par rapport à cela sous un angle de moins de 10°.

5. Insert de coupe selon l'une des revendications 2 à 4, caractérisé par le fait que la distance (A) de l'étranglement (15) à la pointe de coupe (16a, 16b) par rapport à une verticale (28) à la ligne de jonction des coins de coupe (11) est comprise entre 0,1 mm et 1,8 mm.

6. Insert de coupe selon l'une des revendications 1 à 5, caractérisé par le fait que la zone de l'étranglement (15) est arrondie.

7. Insert de coupe selon l'une des revendications 1 à 6, caractérisé par le fait que les coins de coupe (11, 21) sont arrondis et/ou réalisés de manière à présenter un angle de coin (c) agrandi.

8. Outil de perçage pour des perçages de matériau plein (30), comprenant une tige (26) et du moins deux inserts de coupe (35, 31) selon l'une des revendications 1 à 7, échangeables et géométriquement similaires, disposés respectivement dans un évidement sur le côté frontal de la tige (26) et présentant plusieurs tranchants et qui sont disposés sur la tige à écart radial différent, dont les zones de travail sont contiguës l'une à l'autre et se recouvrent en partie, chaque insert de coupe présentant des tranchants avec des segments partiels de tranchant disposés de manière à être inclinés l'un par rapport à l'autre, qui, en état d'usinage, sont simultanément en prise, l'insert de coupe (35) qui est situé radialement le plus à l'intérieur, étant directement contigu à l'axe de foret (27) ou dépassant légèrement celui-ci, la verticale (36) de la ligne de jonction de deux coins de coupe adjacents de l'insert de coupe situé le plus à l'intérieur, étant inclinée d'un angle (b) contre l'axe longitudinal (27) de la tige de telle manière que la pointe de coupe de chaque insert de coupe (35), qui est située à l'intérieur, est en saillie d'une distance par rapport à la pointe de coupe la plus proche en prise, dans la direction axiale de l'outil de perçage, à savoir d'une distance qui est plus grande que la tolérance de fabrication du logement et de l'insert de coupe, de préférence de plus de 0,1 mm.

9. Outil de perçage selon la revendication 8, caractérisé par le fait que l'insert de coupe (10'', 20'', 31) respectivement voisin de l'insert de coupe intérieur (10', 20', 35) est décalé en arrière, dans la direction axiale de l'outil de perçage, d'une distance (v₁, v₂, v₃) qui est plus grande que la tolérance de fabrication du logement et de l'insert de coupe, de préférence de plus de 0,1 mm.

10. Outil de perçage selon l'une des revendications 8 ou 9, caractérisé par le fait que l'insert de coupe (10'', 20'', 31) respectivement voisin de l'insert de coupe intérieur (10', 20', 35) se trouve, avec sa pointe de coupe (s₂₁) faisant saillie dans la direction axiale de l'outil de perçage ou son coin de coupe, dans un plan de coupe qui est situé entre le plan de coupe des pointes de coupe (s₁₁), ou coins de coupe, faisant saillie et celui de la pointe de coupe (s₁₂), ou coin de coupe, décalée en arrière de l'insert de coupe intérieur, de préférence au milieu des plans de coupe mentionnés de l'insert de coupe intérieur.

11. Outil de perçage selon l'une des revendications 8 à 10, caractérisé par le fait qu'une verticale (28, 29, 36) à la ligne de jonction de deux coins de coupe adjacents du tranchant en prise de tous les inserts de coupe est inclinée du même angle (b), de préférence d'un angle compris entre 1 et 10°, par rapport à l'axe longitudinal de la tige.

12. Outil de perçage selon l'une des revendications 8 à 10, caractérisé par le fait que les zones de coupe des inserts de coupe sont choisies de manière à présenter la même grandeur, jusqu'à un écart avec le degré de chevauchement de 1 à 3, que, de préférence, le logement pour l'insert de coupe (10'', 20'', 33) situé radialement à l'extérieur, est formé de telle manière que l'insert de coupe peut être disposé à des écarts radiaux différents.

13. Outil de perçage selon l'une des revendications 8 à 12, caractérisé par le fait que le rayon des coins de coupe est compris entre 0,2 et 1,2 mm et/ou que le coin de coupe (33) présente des zones droites de coin de coupe entre le prolongement (38) et la pointe de coupe (34).
